# EUROPÄISCHE PATENTSCHRIFT

(11) **EP 1 721 133 B1**
(45) Veröffentlichungstag und Bekanntmachung des Hinweises auf die Patenterteilung: **24.10.2018**
(21) Anmeldenummer: 04804922.5
(22) Anmeldetag: 17.12.2004
(51) Int. Cl.: G01F 23/38, G01F 23/32, G01F 23/36, B60K 15/06

(54) **FÜLLSTANDSSENSOR MIT EINEM SCHWIMMER ZUR ERMITTLUNG EINES FÜLLSTANDES AN KRAFTSTOFF IN EINEM KRAFTSTOFFBEHÄLTER UND BAUSATZ FÜR EINEN SOLCHEN FÜLLSTANDSSENSOR**
LEVEL SENSOR COMPRISING A FLOAT FOR DETERMINING A FUEL LEVEL IN A FUEL TANK, AND KIT FOR SUCH A LEVEL SENSOR
DETECTEUR DE NIVEAU MUNI D'UN FLOTTEUR, SERVANT A LA DETERMINATION DU NIVEAU DE CARBURANT DANS UN RESERVOIR, ET DISPOSITIF DE MONTAGE POUR UN TEL DETECTEUR

(30) Priorität: 16.01.2004 DE 102004002461
(43) Veröffentlichungstag der Anmeldung: 15.11.2006
(73) Patentinhaber: Continental Automotive GmbH, 30165 Hannover (DE)
(72) Erfinder: BENNER, Hans-Guenter, 65830 Kriftel (DE); PAUER, Bernd, 65817 Eppstein (DE); PETER, Robert, 65843 Sulzbach (DE)
(86) Internationale Anmeldenummer: PCT/EP2004/053583
(87) Internationale Veröffentlichungsnummer: WO 2005/068946

(56) Entgegenhaltungen:
- EP-A- 0 987 136
- EP-A- 1 304 474
- FR-A- 2 060 346
- US-A- 4 671 121
- US-A- 5 152 170
- PATENT ABSTRACTS OF JAPAN Bd. 012, Nr. 019 (P-657), 21. Januar 1988 (1988-01-21) -& JP 62 175623 A (NISSAN SHATAI CO LTD), 1. August 1987 (1987-08-01)
- PATENT ABSTRACTS OF JAPAN Bd. 2002, Nr. 10, 10. Oktober 2002 (2002-10-10) -& JP 2002 168675 A (NIPPON SEIKI CO LTD), 14. Juni 2002 (2002-06-14)

## Beschreibung

Die Erfindung betrifft einen Füllstandssensor zur Ermittlung eines Füllstandes an Kraftstoff in einem Kraftstoffbehälter eines Kraftfahrzeuges mit einem zur Befestigung im Kraftstoffbehälter vorgesehenen Träger, mit einem mit dem Träger verbundenen Halteteil, mit einer auf dem Halteteil angeordneten Lagerung für einen einen Schwimmer tragenden Hebelarm und mit an dem Halteteil und dem Träger angeordneten Befestigungsmitteln. Weiterhin betrifft die Erfindung einen Bausatz für einen solchen Füllstandssensor.

Bei aus der Praxis bekannten Füllstandssensoren für Kraftstoffbehälter ist der Träger an einem gegen den Boden des Kraftstoffbehälters vorgespannten Schwalltopf befestigt. Das Halteteil wird mit dem Träger bei der Montage verrastet. Hierbei besteht das Problem, für unterschiedlich geformte Kraftstoffbehälter unterschiedliche Füllstandssensoren vorrätig zu halten, bei welchen beispielsweise der Hebelarm nach links oder nach rechts montiert werden kann. Dies erfordert für die unterschiedlichen Füllstandssensoren eine hohe Vielfalt von vorrätig zu haltenden Teilen.

Aus der EP 1 0304 474 B1 ist ein Füllstandssensor mit einem Träger und einem Halteteil bekannt, wobei das Halteteil gegenüber dem Träger um eine vertikale und horizontale Achse drehbar ist, ohne dass sich dabei eine Zuordnung von Befestigungsmittel des Halteteils zu Befestigungsmitteln des Trägers ändert.

Die FR 2 060 346 A offenbart einen aus zwei miteinander vernieteten Trägerteilen im Kraftstoffbehälter zusammengesetzten Träger. Einer der Trägerteile ist an einem Flansch des Kraftstoffbehälters befestigt, während das andere der Trägerteile das Halteteil haltert. Die Trägerteile lassen sich in unterschiedlichen Ausrichtungen miteinander verbinden.

Die US 4 671 121 A und die US 5 152 170 A offenbaren jeweils einen Füllstandssensor mit einem stabförmigen Träger, an dem ein Halteteil des Füllstandssensors befestigt ist. Die Höhe des Füllstandssensors lässt sich hierdurch einstellen.

Der Erfindung liegt das Problem zugrunde, einen Füllstandssensor der eingangs genannten Art so zu gestalten, dass er mit besonders wenigen Bauteilen in unterschiedlich gestalteten Kraftstoffbehältern montiert werden kann. Weiterhin liegt der Erfindung das Problem zugrunde, einen Bausatz für einen solchen Füllstandssensor zu schaffen, welcher mit möglichst wenigen Bauteilen in verschiedenen Kraftstoffbehältern eingesetzt werden kann.

Das erstgenannte Problem wird erfindungsgemäß dadurch gelöst, dass die Befestigungsmittel des Halteteils bei um eine horizontale Achse und um eine vertikale Achse gedrehten Positionen des Halteteils mit den Befestigungsmitteln des Trägers korrespondieren.

Durch diese Gestaltung ist das Halteteil, soweit es der Befestigung an dem Träger dient, symmetrisch gestaltet und lässt sich einfach in vier verschiedenen Stellungen an dem Träger montieren. Damit lässt sich das Halteteil und damit die Lagerung des Hebelarms in Abhängigkeit von den jeweiligen Abmessungen der Kraftstoffbehälter in der entsprechenden Ausrichtung an dem Träger montieren. Dies führt zu einer starken Verringerung der Anzahl der vorrätig zu haltenden Bauteile des erfindungsgemäßen Füllstandssensors. Die Bauteile des Füllstandssensors lassen sich daher ohne Nacharbeitung in verschieden geformten Kraftstoffbehältern einsetzen. Dank der Erfindung sind die Bauteile des erfindungsgemäßen Füllstandssensors für unterschiedliche Kraftstoffbehälter als Gleichteile ausgebildet und lassen sich daher in der bei Kraftstoffbehältern üblichen Großserie besonders kostengünstig fertigen.

Die Befestigungsmittel des Halteteils könnten im einfachsten Fall durch das Halteteil durchgehende Bohrungen sein, welche mit den beispielsweise als Rasthaken ausgebildeten Befestigungsmitteln in jeder Position korrespondieren. Durchgehende Bohrungen lassen sich jedoch gemäß einer vorteilhaften Weiterbildung der Erfindung einfach vermeiden, wenn eine Vorderseite und eine Rückseite des Halteteils jeweils gleichartige Befestigungsmittel aufweisen.

Ein Potentiometer oder magnetisch aktiver Positionssensor des erfindungsgemäßen Füllstandssensor ist zuverlässig gegen Beschädigung geschützt, wenn das Halteteil zwei miteinander verbindbare Gehäuseteile aufweist, wobei wahlweise das eine der Gehäuseteile die Vorderseite und wahlweise das andere der Gehäuseteile die Rückseite des Halteteils bildet.

Der Hebelarm ist gemäß einer anderen vorteilhaften Weiterbildung zuverlässig in dem Halteteil geführt, wenn der Hebelarm einen Bügel aus Kunststoff und einen an dem Bügel befestigten, den Schwimmer tragenden Hebeldraht aufweist und wenn der Bügel in beiden Gehäuseteilen des Halteteils gelagert ist.

Kontaktabheber an einem Potentiometer oder schwankende Abstände eines Magnetes des magnetisch aktiven Positionssensors lassen sich gemäß einer anderen vorteilhaften Weiterbildung zuverlässig vermeiden, wenn eines der Gehäuseteile des Halteteils eine Aufnahme für ein Widerstandsnetzwerk eines magnetisch aktiven Positionssensors oder ein Dickschichtnetzwerk eines Potentiometers und das andere Gehäuseteil eine Gleitbahn für den Hebelarm aufweist.

Ein hoher Widerstand des Füllstandes kennzeichnet teilweise einen leeren Kraftstoffbehälter und teilweise einen befüllten Kraftstoffbehälter. Der erfindungsgemäße Füllstandssensor ermöglicht eine einfache Anpassung an den vorgesehenen Kraftstoffbehälter, wenn die Aufnahme symmetrisch zur verdrehbaren Montage des Widerstandsnetzwerks des magnetisch aktiven Positionssensors oder des Dickschichtnetzwerks eines Potentiometers ausgebildet ist.

Eine Abwinklung des Hebeldrahtes könnte beispielsweise als Lagerachse des Hebelarms ausgebildet sein. Reibung durch unterschiedliches Quellverhalten zwischen dem Metall des Hebeldrahtes und dem aus Kunststoff gefertigten Bügel und dem Halteteil lässt sich jedoch gemäß einer anderen vorteilhaften Weiterbildung der Erfindung einfach vermeiden, wenn der Hebeldraht eine in eine Ausnehmung des Bügels eingeführte Abwinklung aufweist und wenn die Ausnehmung des Bügels außerhalb der Gehäuseteile des Halteteils und von der Lagerung des Bügel beabstandet angeordnet ist. Ein weiterer Vorteil dieser Gestaltung besteht darin, dass der Hebeldraht zusammen mit dem Schwimmer von außen montier- und demontierbar ist. Der erfindungsgemäße Füllstandssensor muss hierfür nicht zerlegt werden.

Zur Vereinfachung der Montage des Halteteils an dem Träger trägt es gemäß einer anderen vorteilhaften Weiterbildung der Erfindung bei, wenn der Träger beider Gehäuseteile des Halteteils zumindest teilweise umgreifende Arme und einen Anschlag zur Abstützung des Halteteils aufweist.

Der erfindungsgemäße Füllstandssensor lässt sich besonders einfach montieren, wenn die Befestigungsmittel des Trägers und des Halteteils als Rasthaken und Rastausnehmungen ausgebildet sind.

Zur weiteren Vereinfachung der Montage des erfindungsgemäßen Füllstandssensors trägt es bei, wenn die Gehäuseteile Rastmittel für ihre verbindung untereinander aufweisen.

Der erfindungsgemäße Füllstandssensor gestaltet sich besonders kompakt, wenn der Hebeldraht über das Halteteil geführt ist.

Das zweit genannte Problem, nämlich die Schaffung eines Bausatzes für einen vorstehend genannten Füllstandssensor, welcher mit möglichst wenigen Bauteilen in verschiedenen Kraftstoffbehältern eingesetzt werden kann, wird erfindungsgemäß dadurch gelöst, dass zwei Bügel vorgesehen sind, wobei einer der Bügel an seiner einem Magneten des Positionssensors oder eines Kontaktes des Potentiometers abgewandten Seite eine Kröpfung zur Halterung des Hebeldrahtes und der andere Bügel die Kröpfung auf der gegenüberliegenden Seite hat.

Durch diese Gestaltung lässt sich bei speziell geformten Kraftstoffbehältern der Bügel einfach austauschen und der Hebelarm in der vorgesehenen Richtung von dem Halteteil wegführen. Dank der Erfindung ist neben den gleich aufgebauten Gehäuseteilen und gleichen Potentiometern oder magnetisch aktiven Positionssensoren und den beiden Bügeln ausschließlich der Hebeldraht auf die unterschiedlichen Abmessungen des Kraftstoffbehälters anzupassen. Der Bausatz erfordert daher für unterschiedliche Kraftstoffbehälter besonders wenige Bauteile.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: schematisch eine Schnittdarstellung durch einen Kraftstoffbehälter mit einem darin angeordneten erfindungsgemäßen Füllstandssensor,
- Figur 2: eine vergrößerte Schnittdarstellung durch den Füllstandssensor aus Figur 1 entlang der Linie II - II,
- Figur 3: den Füllstandssensor aus Figur 1 in einer perspektivischen Darstellung,
- Figur 4-6: eine perspektivische Darstellungen des Füllstandssensors in unterschiedlichen Montagepositionen.

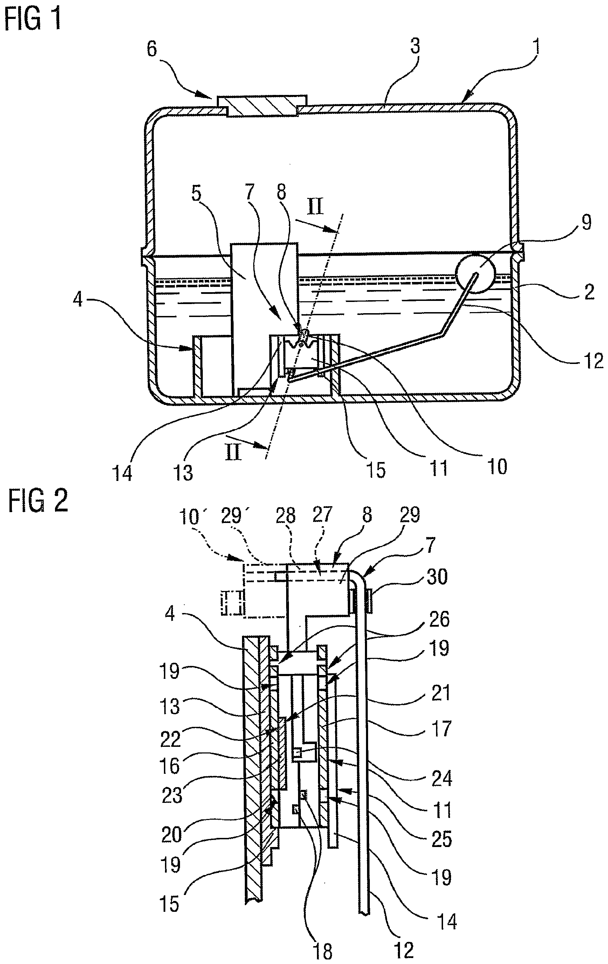

Figur 1 zeigt einen Kraftstoffbehälter 1 mit zwei miteinander verschweißten Halbschalen 2, 3 und einem gegen den Bodenbereich der unteren Halbschale 2 vorgespannten Schwalltopf 4. Die obere Halbschale 3 weist eine zum Einführen einer Kraftstoffpumpe 5 in den Kraftstoffbehälter 1 vorgesehene Öffnung 6 auf. Die Kraftstoffpumpe 5 ist gegen den Boden des Kraftstoffbehälters 1 vorgespannt und saugt Kraftstoff aus dem Schwalltopf 4 an. Weiterhin hat der Kraftstoffbehälter 1 einen Füllstandssensor 7 mit einem an einem Hebelarm 8 befestigten Schwimmer 9. Der Hebelarm 8 ist in einem aus Kunststoff gefertigten Bügel 10 an einem an der Außenseite des Schwalltopfes 4 befestigten Halteteil 11 schwenkbar gelagert und trägt mit einen Hebeldraht 12 den Schwimmer 9. Der Schwimmer 9 folgt einem Kraftstoffspiegel im Kraftstoffbehälter 1 und verschwenkt den Hebelarm 8. Das Halteteil 11 ist mit einem auf dem Schwalltopf 4 befestigen Träger 13 verrastet. Der Träger 13 weist seitliche, das Halteteil 11 umgreifende Arme 14 und einen Anschlag 15 zum Abstützen des Halteteils 11 auf. Zur Montage des Füllstandssensors 7 wird das mit dem Hebelarm 8 vormontierte Halteteil 11 von oben in den Träger 13 eingeschoben und darin verrastet.

Figur 2 zeigt vergrößert den Füllstandssensor 7 aus Figur 1 in einer Schnittdarstellung entlang der Linie II - II. Das Halteteil 11 hat zwei Gehäuseteile 16, 17, welche über Rastmittel 18 miteinander verbunden sind. Die Gehäuseteile 16, 17 des Halteteils 11 weisen als Ausnehmungen ausgebildete Befestigungsmittel 19 auf, welche mit als Rasthaken ausgebildeten Befestigungsmitteln 20 des Trägers 13 korrespondieren. Die als Ausnehmungen ausgebildeten Befestigungsmittel 19 des Halteteils 11 sind an insgesamt vier Stellen der Gehäuseteile 16, 17 angeordnet. Damit lässt sich das Halteteil 11 um seine horizontale Achse und um seine vertikale Achse gedreht und damit in vier verschiedenen Positionen an dem Träger 13 befestigen.

Der Schwenkwinkel des Hebelarms 8 wird von einem magnetisch passiven Positionssensor 21 erfasst. Eines der Gehäuseteile 16 weist eine Aufnahme 22 für ein Widerstandsnetzwerk 23 des Positionssensors 21 auf. Der Bügel 10 trägt einen Magneten 24 des Positionssensors 21. Auf seiner dem Magneten 24 abgewandten Seite steht der Bügel 10 einer Gleitbahn 25 mit geringem Abstand gegenüber. Eine Lagerung 26 des Bügels 10 ist nahe eines Randes beider Gehäuseteile 16, 17 angeordnet und lagert den Bügel 10 in seinem mittleren Bereich. Weiterhin zeigt Figur 2, dass der Bügel 10 an seinem aus dem Halteteil 11 herausragenden Ende eine Ausnehmung 27 zur Aufnahme einer Abwinklung 28 des Hebeldrahtes 12 und eine Kröpfung 29 mit einer Clipsverbindung 30 zur Halterung eines parallel zum Bügel 10 geführten Abschnitts des Hebeldrahtes 12 aufweist.

Strichpunktiert ist in Figur 2 eine zweite Ausführungsform des Bügels 10' dargestellt, welcher eine Befestigung des Hebeldrahtes 12 auf der Innenseite des Schwalltopfes 4 ermöglicht. Dieser Bügel 10' weist eine Kröpfung 29' zur Halterung des Hebeldrahtes 12 auf der dem Widerstandsnetzwerk 23 des Positionssensor 21 zugewandten Seite auf.

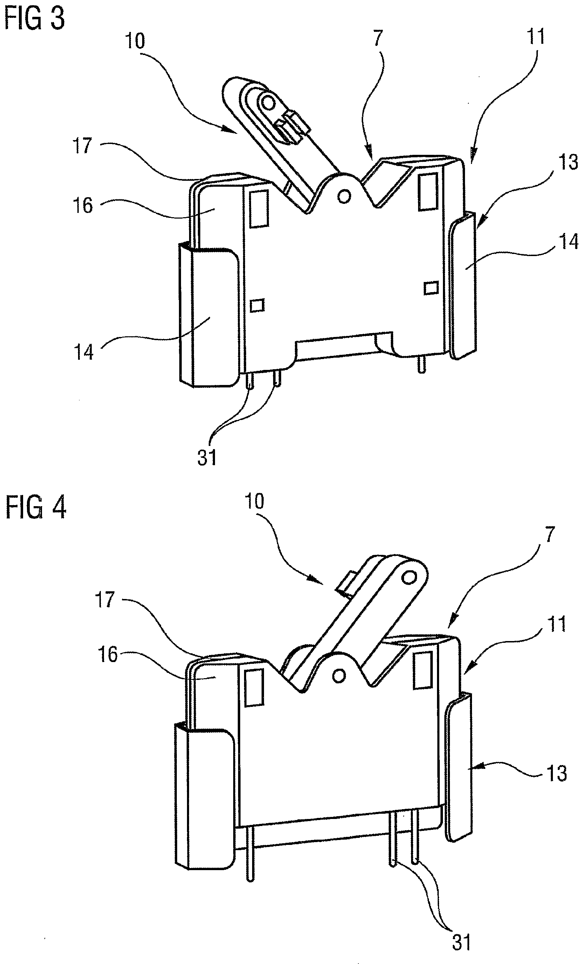

Figur 3 zeigt den Füllstandssensor 7 aus Figur 1 in einer perspektivischen Darstellung. Kontakte 31 zum Anschluss des in Figur 2 dargestellten Positionssensors 21 sind auf dem hinteren Gehäuseteil 16 angeordnet.

Das Halteteil 11 des Füllstandssensors 7 lässt sich um seine vertikale Achse verdreht auf dem Träger 13 befestigen, so dass das die Kontakte 31 des Positionssensors 7 aufweisende Gehäuseteil 16 vorne ist. Diese Stellung ist in Figur 4 dargestellt.

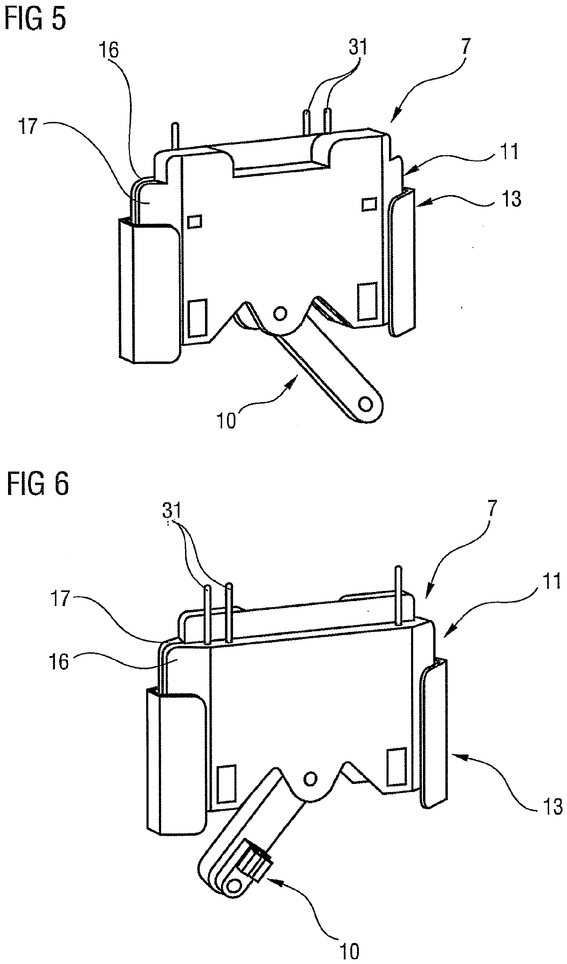

Figur 5 zeigt den Füllstandssensor 7 aus Figur 3 nach einer um seine horizontale Achse gedrehten Montage des Halteteils 11 auf dem Träger 13. Die Gehäuseteile 16, 17 sind hierdurch derart gedreht, dass Kontakte 31 zum Anschluss des Positionssensors 21 auf dem Hinteren der Gehäuseteile 16 angeordnet sind und nach oben weisen.

Figur 6 zeigt den Füllstandssensor 7 aus Figur 5 nach einer um die vertikale Achse gedrehten Montage des Halteteils 11 auf dem Träger 13. Hierbei ist zu erkennen, dass die Kontakte 31 zum Anschluss des Positionssensors 21 auf dem vorderen Gehäuseteil 16 angeordnet sind und nach oben weisen.

In den Figuren 3 bis 6 sind damit vier verschiedene Möglichkeiten zur Montage des Füllstandssensors 7 in Abhängigkeit von den Abmessungen des in Figur 1 dargestellten Kraftstoffbehälters 1 dargestellt. Zur weiteren Erhöhung der Möglichkeiten der Montage des Füllstandssensors 7 lässt sich der Bügel 10 durch den in Figur 2 strichpunktiert dargestellten Bügel 10' ersetzen. Durch den Austausch des Bügels 10, 10' steigt die Anzahl der möglichen Ausrichtungen des Füllstandssensors 7 auf insgesamt acht.

## Patentansprüche

1. Füllstandssensor zur Ermittlung eines Füllstandes an Kraftstoff in einem Kraftstoffbehälter eines Kraftfahrzeuges mit einem zur Befestigung im Kraftstoffbehälter vorgesehenen Träger, mit einem mit dem Träger verbundenen Halteteil, mit einer auf dem Halteteil angeordneten Lagerung für einen einen Schwimmer tragenden Hebelarm und mit an dem Halteteil und dem Träger angeordneten Befestigungsmitteln, **dadurch gekennzeichnet, dass** die Befestigungsmittel (19) des Halteteils (11) bei um eine horizontale Achse und um eine vertikale Achse drehbaren Positionen des Halteteils (11) mit den Befestigungsmitteln (20) des Trägers (13) korrespondieren, so dass das Halteteil (11) um seine horizontale Achse und um seine vertikale Achse drehbar und somit in vier verschiedenen Positionen am Träger (13) befestigbar ist.

2. Füllstandssensor nach Anspruch 1, **dadurch gekennzeichnet, dass** eine Vorderseite und eine Rückseite des Halteteils (11) jeweils gleichartige Befestigungsmittel (19) aufweisen.

3. Füllstandssensor nach Anspruch 1 oder 2, **dadurch gekennzeichnet, dass** das Halteteil (11) zwei miteinander verbindbare Gehäuseteile (16, 17) aufweist, wobei wahlweise das eine der Gehäuseteile (16, 17) die Vorderseite und wahlweise das andere der Gehäuseteile (16, 17) die Rückseite des Halteteils (11) bildet.

4. Füllstandssensor nach Anspruch 3, **dadurch gekennzeichnet, dass** der Hebelarm (8) einen Bügel (10, 10') aus Kunststoff und einen an dem Bügel (10, 10') befestigten, den Schwimmer (9) tragenden Hebeldraht (12) aufweist und dass der Bügel (10, 10') in beiden Gehäuseteilen (16, 17) des Halteteils (11) gelagert ist.

5. Füllstandssensor nach Anspruch 3 oder 4 , **dadurch gekennzeichnet, dass** eines der Gehäuseteile (16) des Halteteils (11) eine Aufnahme (22) für ein Widerstandsnetzwerk (23) eines magnetisch aktiven Positionssensors (21) oder ein Dickschichtnetzwerk eines Potentiometers und das andere Gehäuseteil (17) eine Gleitbahn (25) für den Hebelarm (8) aufweist.

6. Füllstandssensor nach Anspruch 5, **dadurch gekennzeichnet, dass** die Aufnahme (22) symmetrisch zur verdrehbaren Montage des Widerstandsnetzwerk (23) des magnetisch aktiven Positionssensors (21) oder des Dickschichtnetzwerks eines Potentiometers ausgebildet ist.

7. Füllstandssensor nach zumindest einem der Ansprüche 4 bis 6, **dadurch gekennzeichnet, dass** der Hebeldraht (12) eine in eine Ausnehmung (27) des Bügels (10, 10') eingeführte Abwinklung (28) aufweist und dass die Ausnehmung (27) des Bügels (10, 10') außerhalb der Gehäuseteile (16, 17) des Halteteils (11) und von der Lagerung (26) des Bügels (10, 10') beabstandet angeordnet ist.

8. Füllstandssensor nach zumindest einem der Ansprüche 3 bis 7, **dadurch gekennzeichnet, dass** der Träger (13) beider Gehäuseteile (16, 17) des Halteteils (11) zumindest teilweise umgreifende Arme (14) und einen Anschlag (15) zur Abstützung des Halteteils (11) aufweist.

9. Füllstandssensor nach zumindest einem der vorhergehenden Ansprüche, **dadurch gekennzeichnet, dass** die Befestigungsmittel (19, 20) des Trägers (13) und des Halteteils (11) als Rasthaken und Rastausnehmungen ausgebildet sind.

10. Füllstandssensor nach zumindest einem der Ansprüche 3 bis 9, **dadurch gekennzeichnet, dass** die Gehäuseteile (16, 17) Rastmittel (18) für ihre Verbindung untereinander aufweisen.

11. Füllstandssensor nach zumindest einem der Ansprüche 4 bis 10, **dadurch gekennzeichnet, dass** der Hebeldraht (12) über das Halteteil (11) geführt ist.

12. Bausatz für einen Füllstandssensor nach einem der Ansprüche 4 bis 11, **dadurch gekennzeichnet, dass** zwei Bügel (10, 10') vorgesehen sind, wobei einer der Bügel (10') an seiner einem Magneten (24) des Positionssensors (21) oder eines Kontaktes des Potentiometers abgewandten Seite eine Kröpfung (29') zur Halterung des Hebeldrahtes (12) und der andere Bügel (10) die Kröpfung (29) auf der gegenüberliegenden Seite hat.

## Claims

1. Level sensor for determining a fuel level in a fuel tank of a motor vehicle, with a support provided for fastening in the fuel tank, with a holding part connected to the support, with a mounting, which is arranged on the holding part, for a lever arm supporting a float, and with fastening means arranged on the holding part and the support, **characterized in that** the fastening means (19) of the holding part (11) correspond with the fastening means (20) of the support (13) in positions of the holding part (11) in which it is rotated about a horizontal axis and about a vertical axis, and therefore the holding part (11) is rotatable about its horizontal axis and about its vertical axis and is thus fastenable in four different positions on the support (13).

2. Level sensor according to Claim 1, **characterized in that** a front side and a rear side of the holding part (11) each have identical fastening means (19).

3. Level sensor according to Claim 1 or 2, **characterized in that** the holding part (11) has two housing parts (16, 17) which can be connected to each other, with one of the housing parts (16, 17) according to choice forming the front side and the other of the housing parts (16, 17) according to choice forming the rear side of the holding part (11).

4. Level sensor according to Claim 3, **characterized in that** the lever arm (8) has a clip (10, 10') of plastic and a lever wire (12) which is fastened to the clip (10, 10') and supports the float (9), and **in that** the clip (10, 10') is mounted in both housing parts (16, 17) of the holding part (11).

5. Level sensor according to Claim 3 or 4, **characterized in that** one of the housing parts (16) of the holding part (11) has a receptacle (22) for a resistance network (23) of a magnetically active position sensor (21) or a thick-film network of a potentiometer and the other housing part (17) has a slideway (25) for the lever arm (8).

6. Level sensor according to Claim 5, **characterized in that** the receptacle (22) is formed symmetrically with respect to the rotatable installation of the resistance network (23) of the magnetically active position sensor (21) or of the thick-film network of a potentiometer.

7. Level sensor according to at least one of Claims 4 to 6, **characterized in that** the lever wire (12) has an angled portion (28) which is introduced into a recess (27) of the clip (10, 10'), and **in that** the recess (27) of the clip (10, 10') is arranged outside the housing parts (16, 17) of the holding part (11) and at a distance from the mounting (26) of the clip (10, 10').

8. Level sensor according to at least one of Claims 3 to 7, **characterized in that** the support (13) of the two housing parts (16, 17) of the holding part (11) has arms (14) at least partially engaging around it and a stop (15) for supporting the holding part (11).

9. Level sensor according to at least one of the preceding claims, **characterized in that** the fastening means (19, 20) of the support (13) and of the holding part (11) are designed as latching hooks and latching recesses.

10. Level sensor according to at least one of Claims 3 to 9, **characterized in that** the housing parts (16, 17) have latching means (18) for their connection to each other.

11. Level sensor according to at least one of Claims 4 to 10, **characterized in that** the lever wire (12) is guided via the holding part (11).

12. Kit for a level sensor according to one of Claims 4 to 11, **characterized in that** two clips (10, 10') are provided, one of the clips (10') having, on its side facing away from a magnet (24) of the position sensor (21) or a contact of the potentiometer, a bent portion (29') for securing the lever wire (12), and the other clip (10) having the bent portion (29) on the opposite side.

## Revendications

1. Détecteur de niveau servant à déterminer un niveau de carburant dans un réservoir à carburant d'un véhicule automobile, comprenant un élément porteur conçu pour la fixation dans le réservoir à carburant, comprenant une partie de maintien reliée à l'élément porteur, comprenant un palier support disposé sur la partie de maintien pour un bras de levier portant un flotteur et comprenant des moyens de fixation disposés sur la partie de maintien et l'élément porteur, **caractérisé en ce que** les moyens de fixation (19) de la partie de maintien (11) correspondent avec les moyens de fixation (20) de l'élément porteur (13) dans les positions de la partie de maintien (11) rotatives autour d'un axe horizontal et autour d'un axe vertical, de sorte que la partie de maintien (11) peut tourner autour de son axe horizontal et autour de son axe vertical et peut ainsi être fixées dans quatre positions différentes sur l'élément porteur (13).

2. Détecteur de niveau selon la revendication 1, **caractérisé en ce qu'**un côté avant et un côté arrière de la partie de maintien (11) possèdent respectivement des moyens de fixation (19) identiques.

3. Détecteur de niveau selon la revendication 1 ou 2, **caractérisé en ce que** la partie de maintien (11) possède deux parties de boîtier (16, 17) pouvant être assemblées l'une avec l'autre, l'une des parties de boîtier (16, 17) formant, au choix, le côté avant et l'autre des parties de boîtier (16, 17) formant, au choix, le côté arrière de la partie de maintien (11).

4. Détecteur de niveau selon la revendication 3, **caractérisé en ce que** le bras de levier (8) possède un étrier (10, 10') en matière plastique et un fil métallique de levier (12) fixé à l'étrier (10, 10') et portant le flotteur (12), et **en ce que** l'étrier (10, 10') est logé dans les deux parties de boîtier (16, 17) de la partie de maintien (11).

5. Détecteur de niveau selon la revendication 3 ou 4, **caractérisé en ce que** l'une des parties de boîtier (16) de la partie de maintien (11) possède un logement (22) pour un réseau de résistances (23) d'un capteur de position (21) magnétique actif ou un réseau à couche épaisse d'un potentiomètre et l'autre partie de boîtier (17) possède une piste de glissement (23) pour le bras de levier (8).

6. Détecteur de niveau selon la revendication 5, **caractérisé en ce que** le logement (22) est configuré symétrique par rapport au montage pouvant être tourné du réseau de résistances (23) du capteur de position (21) magnétique actif ou du réseau à couche épaisse d'un potentiomètre.

7. Détecteur de niveau selon au moins l'une des revendications 4 à 6, **caractérisé en ce que** le fil métallique de levier (12) possède un pliage (28) introduit dans une cavité (27) de l'étrier (10, 10') et **en ce que** la cavité (27) de l'étrier (10, 10') est disposée en-dehors des parties de boîtier (16, 17) de la partie de maintien (11) et espacée du palier support (26) de l'étrier (10, 10').

8. Détecteur de niveau selon au moins l'une des revendications 3 à 7, **caractérisé en ce que** l'élément porteur (13) des deux parties de boîtier (16, 17) de la partie de maintien (11) possède des bras (14) au moins partiellement enveloppants et une butée (15) servant à supporter la partie de maintien (11).

9. Détecteur de niveau selon au moins l'une des revendications précédentes, **caractérisé en ce que** les moyens de fixation (19, 20) de l'élément porteur (13) et de la partie de maintien (11) sont réalisés sous la forme de crochets d'encliquetage et de creux d'encliquetage.

10. Détecteur de niveau selon au moins l'une des revendications 3 à 9, **caractérisé en ce que** les parties de boîtier (16, 17) possèdent des moyens d'encliquetage (18) pour leur assemblage l'une à l'autre.

11. Détecteur de niveau selon au moins l'une des revendications 4 à 10, **caractérisé en ce que** le fil métallique de levier (12) est guidé par le biais de la partie de maintien (11) .

12. Kit de montage pour un détecteur de niveau selon au moins l'une des revendications 4 à 11, **caractérisé en ce que** deux étriers (10, 10') sont présents, l'un des étriers (10') comportant, sur son côté à l'opposé d'un aimant (24) du capteur de position (21) ou d'un contact du potentiomètre, un coude (29') servant à maintenir le fil métallique de levier (12) et l'autre étrier (10) comportant le coude (29) sur le côté opposé.
